# EUROPEAN PATENT SPECIFICATION

(11) **EP 4 322 764 B1**
(45) Date of publication and mention of the grant of the patent: **04.06.2025**
(21) Application number: 22722349.2
(22) Date of filing: 14.04.2022
(51) Int. Cl.: A23L 2/08, A23L 2/74, A23L 33/105

(54) **FRACTIONATION PROCESS**
FRAKTIONIERUNGSVERFAHREN
PROCÉDÉ DE FRACTIONNEMENT

(30) Priority: 15.04.2021 IT 202100009482
(43) Date of publication of application: 21.02.2024
(73) Proprietor: Fattoria La Vialla Di Gianni, Antonio E Bandino Lo Franco - Societa' Agricola Semplice, 52100 Arezzo (IT)
(72) Inventor: LO FRANCO, Gianni, 52100 Arezzo (IT); LO FRANCO, Antonio, 52100 Arezzo (IT); LO FRANCO, Bandino, 52100 Arezzo (IT); PIZZICHINI, Massimo, 52100 Arezzo (IT); AGNELLI, Andrea, 52100 Arezzo (IT)
(74) Representative: Delbarba, Andrea
(86) International application number: PCT/IB2022/053525
(87) International publication number: WO 2022/219581

(56) References cited:
- EP-A1- 2 338 500
- EP-A1- 2 526 785
- EP-A1- 3 603 415
- WO-A1-2019/058320
- WO-A2-2007/013032
- WO-A2-2009/013596
- ES-A1- 2 634 333

## Description

### FIELD OF THE INVENTION

The present invention relates to a process for obtaining a concentrate of olive vegetation waters and/or olive pomace enriched in polyphenols. Furthermore, the invention relates to a vegetation water concentrate and/or pomace obtained with said process and to the use of the concentrate as a nutritional supplement.

### STATE OF THE ART

Olive oil, an edible oil extracted from olives, i.e. the fruits of the olive tree (*Olea europaea*)*,* has aroused particular interest thanks to the high level of polyphenols contained in it. These compounds are natural antioxidants of plant origin capable of inhibiting the formation of free radicals.

The beneficial properties of olive oil have led to a considerable increase, above all in Italy, in olive cultivation and olive oil production. Consequently, there has also been a large increase in by-products of olive oil production, mainly the vegetation waters and pomace, which are characterised by a high pollutant load and thus generate a considerable environmental impact.

The disposal of this material is strictly regulated at both a national and regional level and entails heavy costs for producers, who are unable to derive any advantage from these waste products.

However, vegetation waters and pomace are a rich source of compounds that are useful for human health; in particular, they include hydroxytyrosol, verbascoside and 3,4 DHPEA-EDA (oleuropein-aglycone di-aldehyde). Verbascoside exerts an anti-inflammatory activity, typically on the oral mucosa. Furthermore, verbascoside is capable of blocking the activity and reducing the presence of iNOS and COX-2, thereby preventing oxidative stress.

3,4 DHPEA-EDA is an oleuropein derivative with marked antibacterial, anti-inflammatory and antioxidant properties.

Hydroxytyrosol is one of the most studied molecules owing to the wide range of biochemical processes in which it exerts its antioxidant activity. Hydroxytyrosol is in fact a potent inhibitor of the oxidative damage deriving from lipid peroxidation in cells, considered to be the main process of tissue damage by free radicals.

Various techniques and processes for the disposal of olive vegetation waters are described in the literature. For example, WO2005123603 describes a process for treating vegetation waters with membrane technologies comprising filtration steps that go from microfiltration to reverse osmosis. However, the process described in WO2005123603 allows a water purified from pollutants to be obtained at the end of the process, but does not allow the various polyphenolic components present in the vegetation waters to be separated, nor does it allow fractions with high concentrations of polyphenols to be obtained. WO 2019/058320 A1 discloses a concentrate of vegetation waters and/or olive pomace obtained by a process comprising the steps of (i) microfiltering a sample of vegetation waters and/or olive pomace and (ii) concentrating by reverse osmosis the microfiltration permeate obtained in step (i).

Thus, there is a strongly felt need for a process which makes it possible to obtain polyphenol-enriched fractions using olive vegetation waters and/or olive pomace. In particular, it would be very advantageous to develop a process that enables fractions with a high content of hydroxytyrosol, 3,4 DHPEA-EDA and verbascoside to be obtained, while at the same time enabling the vegetation waters to be purified of pollutants for the correct disposal thereof.

### SUMMARY OF THE INVENTION

A first aspect of the present invention relates to a process for obtaining a concentrate of olive vegetation waters or olive pomace enriched in polyphenols, said process comprising the steps of:
(a) microfiltering a sample of olive vegetation waters and/or olive pomace to obtain a concentrate (CUF) and an ultrafiltration permeate (PMF);
(b) ultrafiltering the PMF obtained in step (a) to obtain a concentrate (CUF) and an ultrafiltration permeate (PUF);
(c) nanofiltering the PUF obtained in step (b) in order to obtain a first concentrate (CNF1) and a first nanofiltration permeate (PNF1);
(d) nanofiltering the PNF1 obtained in step (c) to obtain a second concentrate (CNF2) and a second nanofiltration permeate (PNF2); and
(e) concentrating by reverse osmosis the PNF2 obtained from step (d) to obtain a reverse osmosis concentrate (CRO) and water.

A second aspect of the present invention relates to a concentrate that is obtained/obtainable according to the process described above. The concentrate preferably comprises hydroxytyrosol and tyrosol. In one embodiment, the concentrate further comprises 3,4-DHPEA-EDA.

A third aspect of the present invention relates to the use of the concentrate as described above as a nutritional supplement.

### BRIEF DESCRIPTION OF THE FIGURES

Figure 1 shows a general diagram of the process according to the present invention (MF= microfiltration; UF= ultrafiltration; NF1 first nanofiltration; NF2 second nanofiltration and RO= Reverse osmosis);
Figure 2 shows an example embodiment of the process according to the present invention;
Figure 3 shows a graph of the productivity flow pattern in relation to the time of the microfiltration step;
Figure 4 shows a graph of the productivity flow pattern in relation to the time of the ultrafiltration step;
Figure 5 shows a graph of the productivity flow pattern in relation to the time of the first nanofiltration step;
Figure 6 shows a graph of the productivity flow pattern in relation to the time of the second nanofiltration step; and
Figure 7 shows a graph of the productivity flow pattern in relation to the time of the reverse osmosis step.

### DEFINITIONS

In the context of the present invention, "3,4-DHPEA-EDA" means the polyphenolic compound also known as "3,4-DHPEA-Elenolic acid di-aldehyde" or "Oleuropein-aglycone di-aldehyde", with a molecular weight of 378.4.

### DETAILED DESCRIPTION OF THE INVENTION

A first aspect of the present invention relates to a process for obtaining concentrate of olive vegetation waters or olive pomace enriched in polyphenols, said process comprising the steps of:
(a) microfiltering a sample of olive vegetation waters and/or olive pomace to obtain a concentrate (CMF) and a microfiltration permeate (PMF);
(b) ultrafiltering the PMF obtained in step (a) to obtain a concentrate (CUF) and an ultrafiltration permeate (PUF);
(c) nanofiltering the PUF obtained in step (b) in order to obtain a first concentrate (CNF1) and a first nanofiltration permeate (PNF1);
(d) nanofiltering the PNF1 obtained in step (c) to obtain a second concentrate (CNF2) and a second nanofiltration permeate (PNF2); and
(e) concentrating by reverse osmosis the PNF2 obtained from step (d) to obtain a reverse osmosis concentrate (CRO) and water.

In a preferred embodiment of the invention, the olive vegetation waters and/or olive pomace are subjected to step (a) of the process without any pre-treatment, i.e. the vegetation waters or olive pomace derive directly from olive pressing processes, without undergoing any treatment, such as pH adjustment, enzymatic hydrolysis reactions or filtration. The microfiltration step (a) is preferably carried out within a time of between 1 and 2 hours after the generation of the vegetation waters or pomace in the mill, in order to avoid an excessive oxidation of the polyphenolic compounds that will be recovered in the various steps of the process.

In one embodiment, the microfiltration step (a) is carried out with a porous membrane, preferably a ceramic membrane, with a pore size between 0.05 and 0.5 µm, preferably between 0.1 and 0.25 µm. In one embodiment, the microfiltration step (a) is carried out at a maximum pressure between 3 and 7 bar, preferably between 4 and 6 bar.

In one embodiment, the ultrafiltration step (b) is carried out with a membrane, preferably a polymeric membrane, with a molecular cut-off between 1 and 20 kDa, preferably between 5 and 15 kDa. The polymeric membrane is preferably made of one of the following materials: polysulfone, polyethersulfone, polyamide or cellulose acetate. In a preferred embodiment of the invention, the polymeric membrane is made of polysulfone. In one embodiment, the ultrafiltration step (b) is carried out at a maximum pressure between 3 and 7 bar, preferably between 4 and 6 bar.

In one embodiment, the nanofiltration steps (c) and (d) are carried out using membranes, preferably polymeric membranes, with a molecular cut-off between 150 and 230 kDa, preferably between 180 and 210 Da.

The polymeric membranes used in the nanofiltration steps (c) and (d) are preferably shaped as a wound spiral and are made of polyamide or nylon or polyethersulfone, preferably polyamide.

In one embodiment, the nanofiltration step (c) is carried out at a temperature between 13 and 35°C, preferably between 17 and 33°C, and at a maximum pressure between 12 and 35 bar, preferably between 25 and 30 bar.

The nanofiltration step (d) is preferably carried out at a temperature between 4 and 28°C, preferably between 6 and 25°C, and at a maximum pressure between 25 and 40 bar, preferably between 27 and 35 bar.

In one embodiment, the reverse osmosis step (e) is carried out with a membrane, preferably a high salt rejection polymeric membrane. The polymeric membrane is preferably made of polyamide or nylon, preferably polyamide. The reverse osmosis step (e) is preferably carried out at a maximum pressure between 30 and 50 bar, preferably between 35 and 45 bar.

In one embodiment, after each step (a)-(d) a diafiltration step is performed by feeding each membrane with water to obtain a retentate which is combined with each permeate obtained in steps (a)-(d). The water used for diafiltration is preferably water obtained from the reverse osmosis step (e).

The CNF1 and CNF2 are preferably combined after being obtained in order to have a single concentrate.

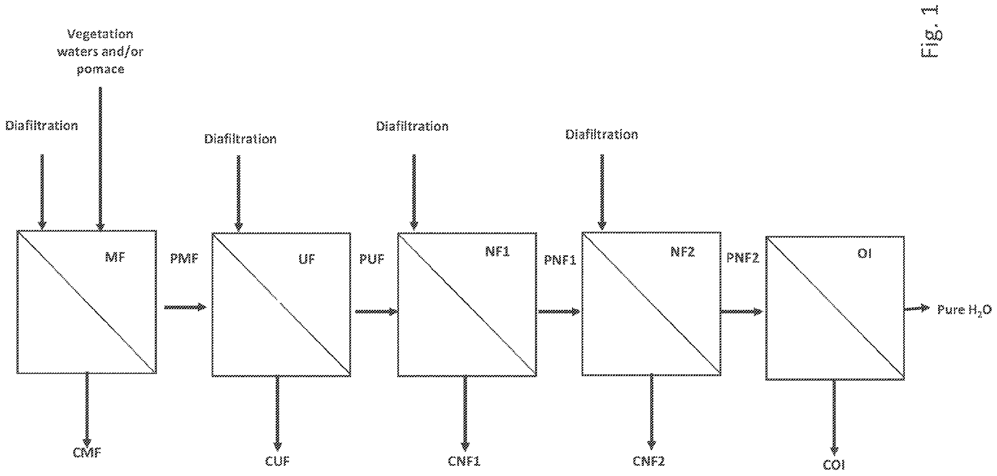

As shown in Figure 1, the raw vegetation waters undergo 5 membrane filtration steps with increasingly small pore sizes and molecular cut-offs, performed under different conditions with membranes suitable for each type of filtration. From each step one obtains a permeate and a concentrate rich in polyphenols (indicated at the bottom in Figure 1 as CMF, CUF, CNF1, CNF2 and CRO) which can be used to prepare both supplements and other preparations for cosmetic or medical use. The permeates obtained from each step, indicated in Figure 1 as PMF, PUF, PNF1 and PNF2 undergo a subsequent filtration step, up to the final step, where a reverse osmosis concentrate (CRO) and pure water are obtained. After each filtration step, with the exception of the reverse osmosis, a diafiltration step is carried out, i.e. each membrane is fed with water, preferably water obtained from the reverse osmosis in the last step, in order to obtain a retentate that is combined with each permeate. Each step is preferably carried out immediately at the end of the preceding step, i.e. the process is carried out continuously until the reverse osmosis concentrate and pure water are obtained.

The Applicant has advantageously found that the process of the present invention makes it possible to obtain liquid fractions comprising various polyphenolic families that can be profitably used both in the field of nutritional supplements and in preparations having biomedical characteristics. In particular, thanks to a double nanofiltration step under different temperature and pressure conditions and the use of untreated vegetation waters, i.e. which derive directly from the mill and do not undergo any treatment prior to the microfiltration step (a), one obtains polyphenol-rich concentrates. In particular, one obtains polyphenol-rich concentrates with a high molecular weight, e.g. hydroxytyrosol, tyrosol and 3,4-DHPEA-EDA. In fact, the two nanofiltration concentrates combined together (CNF1+ CNF2) comprise a percentage of hydroxytyrosol and hydroxytyrosol glucoside that is higher than 75% relative to the total polyphenol percentage in the two concentrates. Furthermore, the reverse osmosis concentrate (CRO) comprises a percentage of hydroxytyrosol and hydroxytyrosol glucoside that is higher than 90% relative to the total polyphenols of the reverse osmosis concentrate.

A second aspect of the present invention relates to a concentrate that is obtained/obtainable according to the process described above in detail. In a preferred embodiment, the concentrate is obtained after the nanofiltration step (c) (CNF1) and/or after the nanofiltration step (d) (CNF2 or CNF1+CNF2), or else after the reverse osmosis step (CRO). The concentrate is preferably obtained by combining CNF1 and CNF2, or it is CRO. The concentrate preferably comprises hydroxytyrosol and tyrosol. In a preferred embodiment, the concentrate comprises a percentage of hydroxytyrosol and hydroxytyrosol glucoside higher than 75% relative to the total polyphenols present in the concentrate. The concentrate preferably comprises a percentage of hydroxytyrosol and hydroxytyrosol glucoside higher than 90% relative to the total polyphenols present in the concentrate.

In one embodiment, the concentrate further comprises 3,4-DHPEA-EDA. The concentrate preferably further comprises β-hydroxyverbascoside, verbascoside, caffeic acid, glucose and fructose.

The amount of hydroxytyrosol preferably ranges between 4 and 12 grams per litre of concentrate (g/L), more preferably between 5 and 10 g/L.

The amount of the hydroxytyrosol glucoside preferably ranges between 1.5 and 6 g/L, more preferably between 2 and 5 g/L.

The amount of 3,4-DHPEA-EDA is preferably between 0.5 and 4 g/L, more preferably between 1 and 3 g/L.

The amount of tyrosol is preferably between 0.2 and 1.5 g/L, more preferably between 0.3 g/L and 1 g/L.

The amount of β-hydroxyverbascoside is preferably between 0.3 and 1.5, more preferably between 0.5 and 1 g/L.

The amount of verbascoside is preferably between 0.4 and 1.7 g/L, more preferably between 0.6 and 1 g/L.

The amount of caffeic acid is preferably between 0.3 and 1 g/L, more preferably between 0.45 and 0.9 g/L.

The amount of glucose and fructose is preferably between 1 and 10 g/L, more preferably between 1 and 7 g/L.

A third aspect of the present invention relates to the use of the concentrate as described above in detail as a nutritional supplement. In fact, the concentrate of the present invention can be used as a dietary supplement, for example to reduce the effects of oxidative stress in an individual.

### EXAMPLE

Vegetation waters just generated in a mill by cold pressing of organic olives from biodynamic agriculture were treated with a microfiltration (MF) process that uses porous ceramic membranes with a pore size of 0.14 micron. A raw extract of polyphenols, proteins, sugars, mineral salts and a soluble cellulose fraction were obtained from the permeate of this process. The MF filtered product had a dark red colour but appeared perfectly clear. In order to improve the polyphenol content of this matrix, the microfiltration permeate was subjected to ultrafiltration (UF), a double nanofiltration step (NF1 and 2) and finally a reverse osmosis step (RO) on the second permeate of NF2.

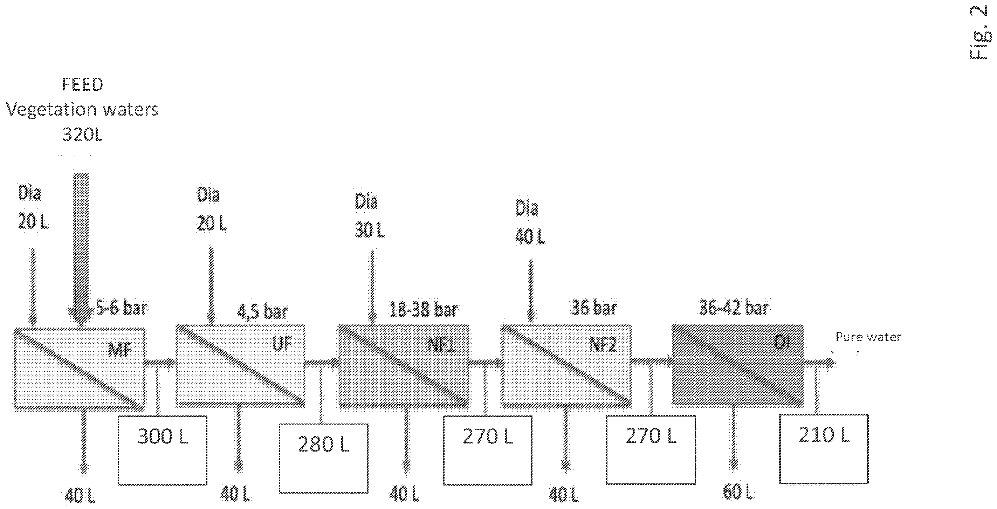

A diagram of the process is shown in Figure 2.

As can be seen from figure 2, the raw vegetation waters underwent 5 membrane filtration steps with increasingly tight molecular cut-offs, which were carried out under different conditions and with membranes suitable for each type of filtration. The technical features of the membranes used are shown in table 1.

**Table 1: Technical features of the membranes used**

| **Step** | **Material** | **Surface (m²)** | **Cut-off** | **Productivity (L/^{m2h})** | **Max ΔP (Bar)** |
|---|---|---|---|---|---|
| **MF** | Ceramic | 1.05 | 0.14 micron | 280-320 | 6.0 |
| **UF** | Polysulfone | 5.4 | 10 KDa | 60-80 | 1.2 |
| **NF** | Polyamide | 9.1 | 200Da | 38.4 | 40 |
| **RO** | Polyamide | 7.9 | High salt rejection | 55.6 | 45 |

### Microfiltration

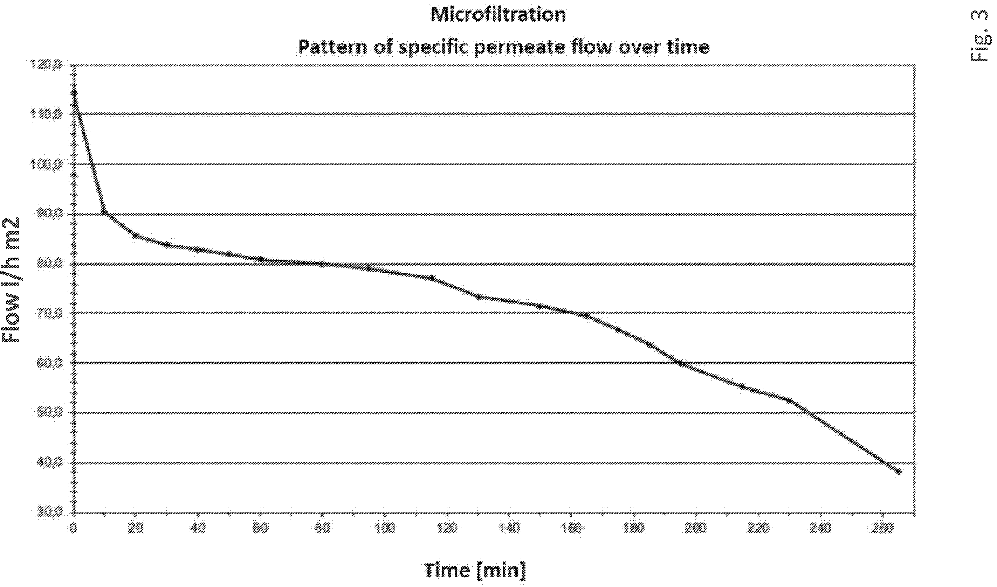

About 320 L of fresh vegetation waters were fed to the MF system; the permeate produced was stored in the feed tank of the subsequent membrane filtration section (UF), whilst the vegetation waters from which the permeate was removed were concentrated in the feed tank. During the filtration, the flow value of the permeate produced, graphically represented over time in Figure 3, decreased, following a typical trend; to avoid excessively rapid clogging and thus an excessively marked decline in productivity, the system is operated with in-line backwashing (back pulse). Once the desired value of the concentration ratio (VCR) was reached, a diafiltration step (Dia) with demineralised water was carried out in order to further extract the products of interest from the concentrated fraction. The volume of the feed tank is reduced to 40 L when the permeate produced is about 280 L (VCR = 320/40 = 8); then 20 L of demineralised water are added, bringing the load volume to 60 L, and operation continues for enough time to permeate another 20 L of product. The total permeate produced and available for the next UF step was about 300 L.

Overall, for the MF step, a mean specific flow of about 75 L/m²h is assumed. The MF permeate is clear and has a pH of 5.4 and an electrical conductivity of 10.80 mS/cm at 23 °C.

During filtration, a system for controlling the temperature by cooling with mains water allows the temperature to be maintained below the set values, thus avoiding the normal increasing trend; this serves not so much to protect the membrane, which, being made of ceramic in this section would not need it, but rather to protect the product and the components of interest thereof, which, as known, are thermolabile.

### Ultrafiltration

About 280 L of microfiltration permeate are refrigerated in order to start the UF from an initial temperature of about 6.5 °C. The aim is to obtain about 300 L of PUF thanks to the addition of the diafiltration volume. The inlet operating pressure of the membrane is about 5 bar and the feed flow rate of the system is about 300 L/h, whereas the recirculation flow rate over the membrane with the second pump is about 7 m³/h. The productivity in UF is initially very high (about 380 L/h) but then decreases suddenly as expected.

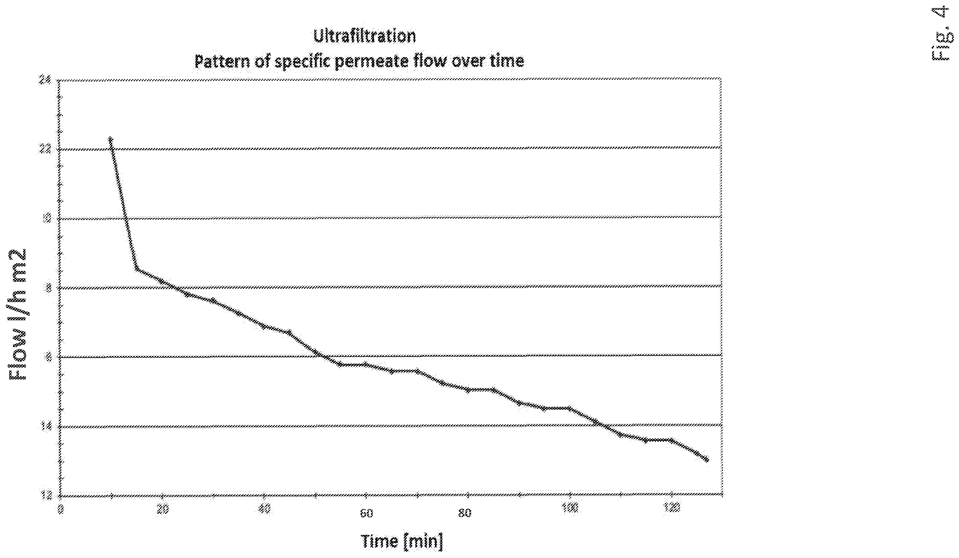

The permeability pattern over time is shown in the graph in figure 4. Overall, for the UF step, a specific mean flow of about 15.5 L/m²h is assumed.

Once the desired value of the concentration ratio (VCR) is reached, a diafiltration step (Dia) with demineralised water is carried out in order to further extract the products of interest from the concentrated fraction. The volume of the feed tank is reduced to 40 L when the permeate produced is about 260 L (VCR = 300/40 = 7.5); then 20 L of demineralised water are added, bringing the load volume to 60 L, and operation continues for enough time to permeate another 20 L of product The total permeate produced and available for the next UF step is about 280 L.

The aim was to produce a sufficient amount of permeate to guarantee the next steps of the process. All the permeate produced was used to feed the 1st NF step. The UF permeate has a light yellow-orange colour, a pH of 5.2 and an electrical conductivity of 10.23 mS/cm at 22 °C.

### Nanofiltration

In this test the NF was divided into two successive steps in series on the permeate (see diagram in fig.2). A diafiltration step (Dia) was carried out on the concentrate to increase the amount of hydroxytyrosol that passes in the permeate. The second NF stage was performed at a low temperature and at a high pressure in order to maximise the performance of the membrane, which, in this manner, will retain the polyphenols as much as possible and allow hydroxytyrosol to pass.

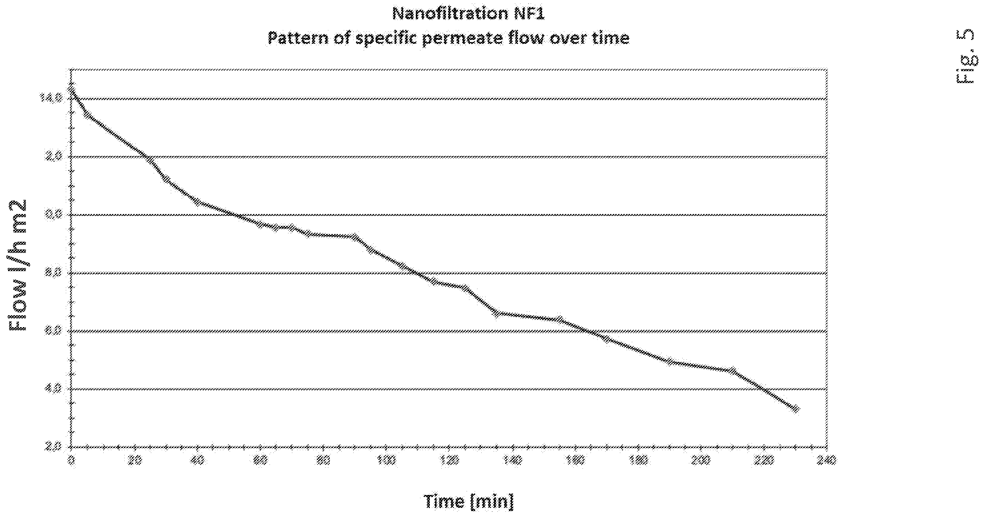

Nanofiltration of the UF permeate:
NF1 Pressure 18-38 bar, Temperature 17.5 °C - 32 °C. Feed 280 L, Dia 30 L, Permeate 270 L, Concentrate 40 L, VCR 7;
A graph of the specific permeate flow over time (expressed in L/h/m²) is shown in figure 5.

Overall, for the first NF step, a mean specific flow of about 7.5L/m²h is assumed.

### Nanofiltration of the NF permeate

The total volume of PNF of the first step, about 260 L, was fed to the second NF step. The mean temperature was lower than in the first NF step, since refrigeration is activated during the test, plus the operating pressure was higher. The filtration specifications are summed up below:
NF2 Pressure 28-34 bar, Temperature 23 °C - 8 °C.

Feed 270 L, Dia 40 L, Permeate 270 L, Concentrate 40 L, VCR 6.75.

At this point the product was already treated by NF and therefore, as was expected, the test proceeded with rather high permeability values.

Out of the about 310 L fed (including the 40 L for diafiltration), about 270 L of permeate were produced, reaching a VCR equal to about 6.8.

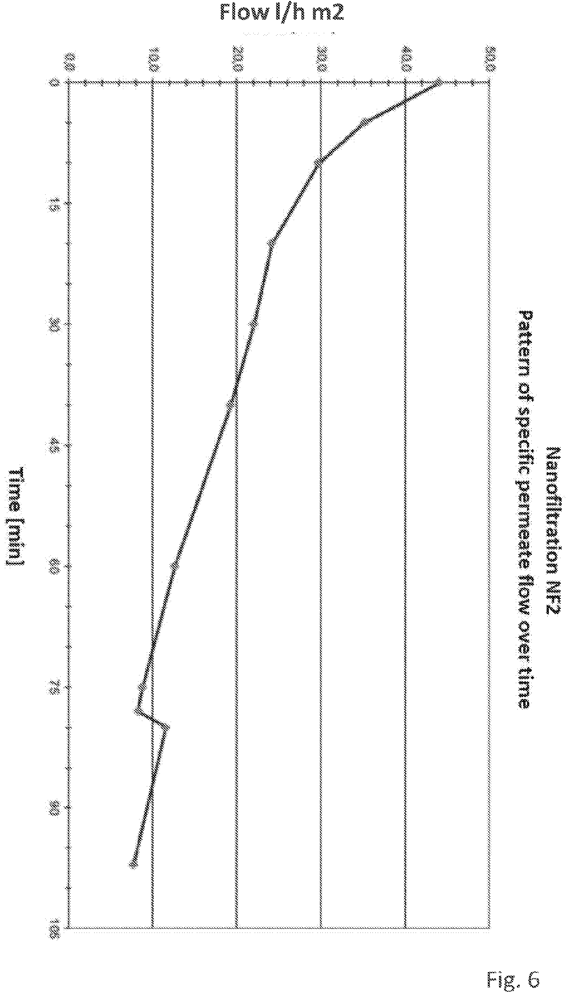

A graph of the specific permeate flow over time (expressed in L/h/m²) is shown in figure 6.

Overall, for the second NF step, a mean specific flow of about 16L/m²h is assumed.

### Reverse osmosis

The NF permeate was treated by reverse osmosis (RO) to obtain, in the concentrate, the polyphenolic fractions with a lower molecular weight, i.e. the ones that passed the NF barrier, mainly hydroxytyrosol. One starts from a volume of NF permeate of about 270 L. The RO was conducted at high pressure and at a low temperature to increase the selectivity of the membrane vis-à-vis the polyphenols present in the NF permeate. The maximum RO pressure is about 40 bar; the RO permeate is clear in appearance. The test is pushed further by gradually lowering the operating temperature (from an initial 12 °C to a final temperature of about 9 °C) until a final value of VCR equal to about 4.5. The electrical conductivity value of the permeate remains low during the entire test, 30-90 µS/cm, and in the final part the value begins to increase, as expected, up to a maximum of about 200 µS/cm.

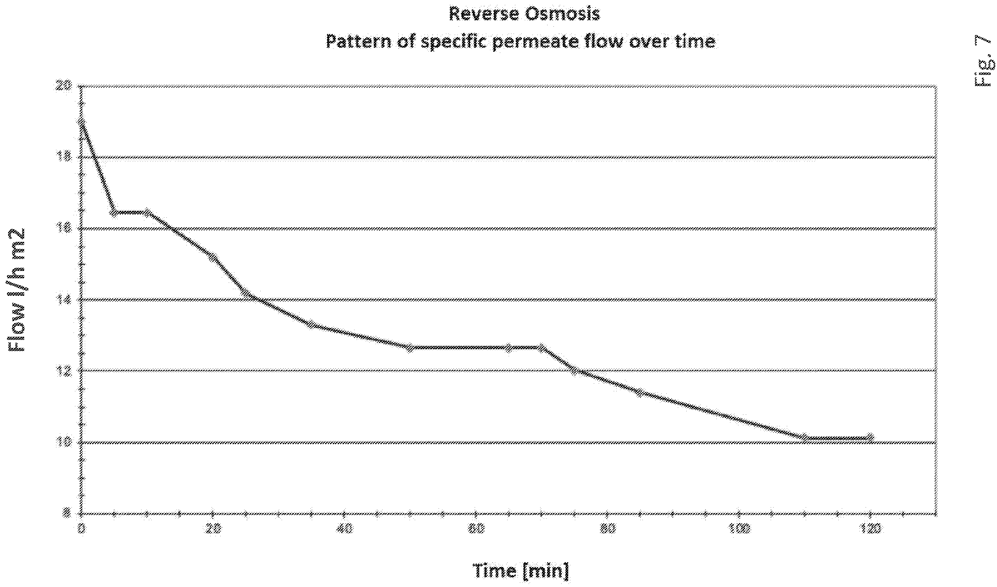

At the end of the RO filtration about 60 L of concentrate are obtained in the feed tank. A graph of the specific permeate flow over time is shown in Figure 7. Overall, for the RO step, a mean specific flow of about 12.7 L/m²h is assumed.

The RO permeate is about 210 L; this clear permeate is used in part to carry out the diafiltrations described in the previous sections.

During the various steps, samples are collected and direct intermediate conductivity analyses are performed; the data are shown in table 2.

**Table 2: Analysis of Electrical Conductivity and pH in the various test fractions**

| Sample | Electrical conductivity (mS/cm) | Temperature (°C) | pH |
|---|---|---|---|
| Feed (A.V.) | | | |
| P-MF | 10.80 | 10 | 5.4 |
| P-UF | 10.23 | 22 | 5.2 |
| C-UF | 10.13 | 30 | 5.3 |
| P-NF1 | 4.89 | 16 | 5.5 |
| C-NF1 | 18.04 | 18 | 5.7 |
| P-NF2 | 3.00 | 10 | 5.9 |
| C-NF2 | 12.64 | 7 | 6.0 |
| Final CRO | 5.98 | 10 | 5.3 |
| Final PRO | 0.14 | 10 | 5.4 |

During the various filtration steps (MF, UF, NF and RO) samples were collected for chemical analyses in a laboratory; the results are shown in table 3.

**Table 3: chemical compositions of the fractions obtained**

| **Analytes** | **PMF** | **PUF** | **CNF1** | **PNF1** | **CNF2** | **PNF2** | **CRO** |
|---|---|---|---|---|---|---|---|
| Phenolic comp. | [g/L] | [g/L] | [g/L] | [g/L] | [g/L] | [g/L] | [g/L] |
| Hydroxytyrosol glucoside | 1.82 | 0.13 | 0.42 | 0.01 | 3.01 | 0.97 | 2.73 |
| Hydroxytyrosol | 0.25 | 1.46 | 2.65 | 0.65 | 0.37 | 0.01 | 0.02 |
| Tyrosol + glycosidic deriv. | 0.17 | 0.17 | 0.51 | 0.02 | 0.12 | 0.00 | 0.23 |
| Chlorogenic acid | 0.00 | 0.00 | 0.00 | 0.00 | 0.00 | 0.00 | 0.00 |
| Caffeic acid | 0.21 | 0.07 | 0.18 | 0.02 | 0.40 | 0.05 | 0.15 |
| b-hydroxyverbascoside is. 1 | 0.18 | 0.08 | 0.28 | 0.01 | 0.23 | 0.00 | 0.00 |
| b- hydroxyverbascoside is. 2 | 0.15 | 0.08 | 0.26 | 0.01 | 0.12 | 0.00 | 0.01 |
| Rutin | 0.00 | 0.00 | 0.00 | 0.00 | 0.00 | 0.00 | 0.00 |
| Verbascoside | 0.22 | 0.23 | 0.78 | 0.03 | 0.08 | 0.00 | 0.00 |
| Luteolin-7-O-glucoside | 0.00 | 0.00 | 0.00 | 0.00 | 0.00 | 0.00 | 0.00 |
| Nuzhenide | 0.00 | 0.00 | 0.00 | 0.00 | 0.00 | 0.00 | 0.00 |
| Isoverbascoside | 0.00 | 0.00 | 0.00 | 0.00 | 0.00 | 0.00 | 0.00 |
| Caffeoyl-secologanoside | 0.00 | 0.00 | 0.00 | 0.00 | 0.00 | 0.00 | 0.00 |
| 3,4-DHPEA-EDA | 0.89 | 0.43 | 1.51 | 0.04 | 0.08 | 0.00 | 0.00 |
| Oleuropein aglycone | 0.00 | 0.00 | 0.00 | 0.00 | 0.02 | 0.00 | 0.00 |
| p-Coumaroyl-secologanoside | 0.00 | 0.06 | 0.22 | 0.01 | 0.09 | 0.00 | 0.00 |
| Total at 280 nm | 9.31 | 4.57 | 13.26 | 0.96 | 7.75 | 1.17 | 3.34 |
| % HT/total polyphenols | 26.3 | 40.1 | 28.4 | 73.1 | 50.3 | 88.0 | 93.7 |
| Glucose and fructose | 18.05 | / | / | / | 5.98 | 0.111 | 1.18 |
| Total Phenolic compounds | 9.309 | 4.566 | 13.26 | 0.957 | 7.747 | 1.170 | 3.340 |

The results are expressed in g of Tyrosol per litre of sample solution, internal standard: Syringic Acid. The quantification limit is 0.2 g/L; therefore, values below 0.2 are to be considered only approximate.

The value indicated as % of hydroxytyrosol and derivatives thereof, relative to the total polyphenols determined by HPLC, comprises not only hydroxytyrosol and tyrosol, but also hydroxytyrosol glucoside and caffeic acid. In practical terms, it is a % of acid polyphenols relative to the complex ones but determined with HPLC, hence the data are reliable. The carbohydrates were determined with ionic chromatography techniques.

### Analysis of the results

The membrane filtration tests were carried out with various pilot membrane units, which allowed the volumes of the different fractions to be treated as shown in the diagram in figure 1.

The stated volumes are indicative of the invention, whereas the membranes used are commercial ones that can be freely used in an industrial process. Therefore, the invention is scalable upwards in terms of production.

It is clear that the double NF makes it possible to enrich the permeates in the components related to acid polyphenols and concentrates the complex polyphenols in the NF concentrate. In this manner the two fractions can be available so as to be able to be combined together or used individually for biomedical applications targeted according to therapeutic needs. A non-negligible amount of pure vegetable water is also obtained from the process (because it passes the osmosis); it is used for the diafiltration of the preceding filtration sections (MF, UF and NF).

## Claims

1. A process for obtaining a concentrate of olive vegetation waters and/or olive pomace enriched in polyphenols, said process comprising the steps of:
(a) microfiltering a sample of olive vegetation waters and/or olive pomace to obtain a concentrate (CMF) and a microfiltration permeate (PMF);
(b) ultrafiltering the PMF obtained in step (a) to obtain a concentrate (CUF) and an ultrafiltration permeate (PUF);
(c) nanofiltering the PUF obtained in step (b) to obtain a first concentrate (CNF1) and a first nanofiltration permeate (PNF1);
(d) nanofiltering the PNF1 obtained in step (c) to obtain a second concentrate (CNF2) and a second nanofiltration permeate (PNF2); and
(e) concentrating by reverse osmosis the PNF2 obtained from step (d) to obtain a reverse osmosis concentrate (CRO) and water.

2. The process according to claim 1, wherein the nanofiltration step (c) is carried out at a temperature between 13 and 35°C, preferably between 17 and 33°C, and at a maximum pressure between 12 and 35 bar, preferably between 25 and 30 bar.

3. The process according to claim 1 or 2, wherein the nanofiltration step (d) is carried out at a temperature between 4 and 28°C, preferably between 6 and 25°C, and at a maximum pressure between 25 and 40 bar, preferably between 27 and 35 bar.

4. The process according to any one of claims 1-3, wherein the nanofiltration steps (c) and (d) are carried out using polymeric membranes with a molecular cut-off between 150 and 230 Dalton (Da), preferably between 180 and 210 Da.

5. The process according to claim 4, wherein the polymeric membranes used in the nanofiltration steps (c) and (d) are shaped as a wound spiral and are made of polyamide or nylon or polyethersulfone, preferably polyamide.

6. The process according to any one of claims 1-5, wherein the microfiltration step (a) is carried out at a maximum pressure of between 3 and 7 bar, preferably between 4 and 6 bar, preferably using a porous ceramic membrane with a pore size between 0.10 and 0.20 microns, preferably between 0.12 and 0.16 microns.

7. The process according to any one of claims 1-6, wherein the ultrafiltration step (b) is carried out at a maximum pressure between 3 and 7 bar, preferably between 4 and 6 bar, preferably using a polymeric membrane with a molecular cut-off of between 5 and 15 kDa, preferably between 8 and 12 kDa.

8. The process according to any one of claims 1-7, wherein the reverse osmosis step (e) is carried out at a maximum pressure between 30 and 50 bar, preferably between 35 and 45 bar, preferably using a high salt rejection polymeric membrane made of polyamide.

9. The process according to any one of claims 1-8, wherein after each step (a)-(d) a diafiltration step is performed by feeding each membrane with water to obtain a retentate which is combined with each permeate obtained in steps (a)-(d).

10. The process according to claim 9, wherein the water used for diafiltration is water obtained from the reverse osmosis step (e).

11. An olive vegetation water concentrate comprising hydroxytyrosol and hydroxytyrosol glucoside obtained by the process according to any one of claims 1-10, wherein the concentrate comprises a percentage of hydroxytyrosol and hydroxytyrosol glucoside higher than 75% relative to the percentage of total polyphenols in the concentrate.

12. The vegetable water concentrate according to claim 11, wherein the concentrate comprises a percentage of hydroxytyrosol and hydroxytyrosol glucoside higher than 90% relative to the percentage of total polyphenols in the concentrate.

13. The concentrate according to claim 11 or 12, comprising 3,4-DHPEA-EDA.

14. The concentrate according to any one of claims 11-13, further comprising: at least one phenolic compound chosen from: tyrosol, β-hydroxyverbascoside and verbascoside; and/or at least one carbohydrate chosen from glucose, and fructose and/or caffeic acid.

15. Use of the concentrate according to any one of claims 11-14 as a nutritional supplement.

## Patentansprüche

1. Verfahren zum Erhalten eines Konzentrats aus Olivenvegetationswasser und/oder Oliventrester, das mit Polyphenolen angereichert ist, wobei das Verfahren die folgenden Schritte umfasst:
(a) Mikrofiltrieren einer Probe von Olivenvegetationswasser und/oder Oliventrester, um ein Konzentrat (CMF) und ein Mikrofiltrationspermeat (PMF) zu erhalten;
(b) Ultrafiltrieren des in Schritt (a) erhaltenen PMF, um ein Konzentrat (CUF) und ein Ultrafiltrationspermeat (PUF) zu erhalten;
(c) Nanofiltrieren des in Schritt (b) erhaltenen PUF, um ein erstes Konzentrat (CNF1) und ein erstes Nanofiltrationspermeat (PNF1) zu erhalten;
(d) Nanofiltrieren des in Schritt (c) erhaltenen PNF1, um ein zweites Konzentrat (CNF2) und ein zweites Nanofiltrationspermeat (PNF2) zu erhalten; und
(e) Konzentrieren des aus Schritt (d) erhaltenen PNF2 durch Umkehrosmose, um ein Umkehrosmosekonzentrat (CRO) und Wasser zu erhalten.

2. Verfahren nach Anspruch 1, wobei der Nanofiltrationsschritt (c) bei einer Temperatur zwischen 13 und 35 °C, vorzugsweise zwischen 17 und 33 °C, und bei einem maximalen Druck zwischen 12 und 35 bar, vorzugsweise zwischen 25 und 30 bar, durchgeführt wird.

3. Verfahren nach Anspruch 1 oder 2, wobei der Nanofiltrationsschritt (d) bei einer Temperatur zwischen 4 und 28 °C, vorzugsweise zwischen 6 und 25 °C, und bei einem maximalen Druck zwischen 25 und 40 bar, vorzugsweise zwischen 27 und 35 bar, durchgeführt wird.

4. Verfahren nach einem der Ansprüche 1-3, wobei die Nanofiltrationsschritte (c) und (d) unter Verwendung von Polymermembranen mit einem molekularen Cut-off zwischen 150 und 230 Dalton (Da), vorzugsweise zwischen 180 und 210 Da, durchgeführt werden.

5. Verfahren nach Anspruch 4, wobei die in den Nanofiltrationsschritten (c) und (d) verwendeten polymeren Membranen als gewickelte Spirale geformt sind und aus Polyamid oder Nylon oder Polyethersulfon, vorzugsweise Polyamid, bestehen.

6. Verfahren nach einem der Ansprüche 1-5, wobei der Mikrofiltrationsschritt (a) bei einem maximalen Druck zwischen 3 und 7 bar, vorzugsweise zwischen 4 und 6 bar, vorzugsweise unter Verwendung einer porösen keramischen Membran mit einer Porengröße zwischen 0,10 und 0,20 µm, vorzugsweise zwischen 0,12 und 0,16 µm, durchgeführt wird.

7. Verfahren nach einem der Ansprüche 1-6, wobei der Ultrafiltrationsschritt (b) bei einem maximalen Druck zwischen 3 und 7 bar, vorzugsweise zwischen 4 und 6 bar, vorzugsweise unter Verwendung einer polymeren Membran mit einem molekularen Cut-off zwischen 5 und 15 kDa, vorzugsweise zwischen 8 und 12 kDa, durchgeführt wird.

8. Verfahren nach einem der Ansprüche 1-7, wobei der Umkehrosmoseschritt (e) bei einem maximalen Druck zwischen 30 und 50 bar, vorzugsweise zwischen 35 und 45 bar, vorzugsweise unter Verwendung einer hochsalzabweisenden Polymermembran aus Polyamid durchgeführt wird.

9. Verfahren nach einem der Ansprüche 1-8, wobei nach einem jeden Schritt (a)-(d) ein Diafiltrationsschritt durchgeführt wird, indem einer jeden Membran Wasser zugeführt wird, um ein Retentat zu erhalten, das mit einem jeden in den Schritten (a)-(d) erhaltenen Permeat kombiniert wird.

10. Verfahren nach Anspruch 9, wobei das zur Diafiltration verwendete Wasser Wasser ist, das aus dem Umkehrosmoseschritt (e) erhalten wird.

11. Olivenvegetationswasserkonzentrat, umfassend Hydroxytyrosol und Hydroxytyrosolglucosid, erhalten durch das Verfahren nach einem der Ansprüche 1-10, wobei das Konzentrat einen Prozentsatz von Hydroxytyrosol und Hydroxytyrosolglucosid von mehr als 75 %, bezogen auf den Prozentsatz der gesamten Polyphenole in dem Konzentrat, umfasst.

12. Pflanzenwasserkonzentrat nach Anspruch 11, wobei das Konzentrat einen Prozentsatz von Hydroxytyrosol und Hydroxytyrosolglucosid von mehr als 90 %, bezogen auf den Prozentsatz der gesamten Polyphenole in dem Konzentrat, umfasst.

13. Konzentrat nach Anspruch 11 oder 12, umfassend 3,4-DHPEA-EDA.

14. Konzentrat nach einem der Ansprüche 11-13, ferner umfassend: mindestens eine phenolische Verbindung, ausgewählt aus: Tyrosol, β-Hydroxyverbascosid und Verbascosid; und/oder mindestens ein Kohlenhydrat, ausgewählt aus Glucose und Fructose und/oder Kaffeesäure.

15. Verwendung des Konzentrats nach einem der Ansprüche 11-14 als Nahrungsergänzungsmittel.

## Revendications

1. Procédé d'obtention d'un concentré d'eaux de végétation d'olive et/ou de marc d'olive enrichi en polyphénols, ledit procédé comprenant les étapes suivantes :
(a) microfiltrer un échantillon d'eaux de végétation d'olive et/ou de marc d'olive pour obtenir un concentré (CMF) et un perméat de microfiltration (PMF) ;
(b) ultrafiltrer le PMF obtenu à l'étape (a) pour obtenir un concentré (CUF) et un perméat d'ultrafiltration (PUF) ;
(c) nanofiltrer le PUF obtenu à l'étape (b) pour obtenir un premier concentré (CNF1) et un premier perméat de nanofiltration (PNF1) ;
(d) nanofiltrer le PNF1 obtenu à l'étape (c) pour obtenir un deuxième concentré (CNF2) et un deuxième perméat de nanofiltration (PNF2) ; et
(e) concentrer par osmose inverse le PNF2 obtenu à l'étape (d) pour obtenir un concentré d'osmose inverse (CRO) et de l'eau.

2. Procédé selon la revendication 1, dans lequel l'étape de nanofiltration (c) est réalisée à une température comprise entre 13 et 35° C, de préférence entre 17 et 33° C, et à une pression maximale comprise entre 12 et 35 bars, de préférence entre 25 et 30 bars.

3. Procédé selon la revendication 1 ou 2, dans lequel l'étape de nanofiltration (d) est réalisée à une température comprise entre 4 et 28 °C, de préférence entre 6 et 25 °C, et à une pression maximale comprise entre 25 et 40 bars, de préférence entre 27 et 35 bars.

4. Procédé selon l'une quelconque des revendications 1-3, dans lequel les étapes de nanofiltration (c) et (d) sont réalisées à l'aide de membranes polymères dont le seuil de coupure moléculaire est compris entre 150 et 230 daltons (Da), de préférence entre 180 et 210 Da.

5. Procédé selon la revendication 4, dans lequel les membranes polymères utilisées dans les étapes de nanofiltration (c) et (d) ont la forme d'une spirale enroulée et sont constituées de polyamide, de nylon ou de polyéthersulfone, de préférence de polyamide.

6. Procédé selon l'une quelconque des revendications 1-5, dans lequel l'étape de microfiltration (a) est réalisée à une pression maximale comprise entre 3 et 7 bars, de préférence entre 4 et 6 bars, en utilisant de préférence une membrane céramique poreuse dont la taille des pores est comprise entre 0,10 et 0,20 micron, de préférence entre 0,12 et 0,16 micron.

7. Procédé selon l'une quelconque des revendications 1-6, dans lequel l'étape d'ultrafiltration (b) est réalisée à une pression maximale comprise entre 3 et 7 bars, de préférence entre 4 et 6 bars, en utilisant de préférence une membrane polymère dont le seuil de coupure moléculaire est compris entre 5 et 15 kDa, de préférence entre 8 et 12 kDa.

8. Procédé selon l'une quelconque des revendications 1-7, dans lequel l'étape d'osmose inverse (e) est réalisée à une pression maximale comprise entre 30 et 50 bars, de préférence entre 35 et 45 bars, en utilisant de préférence une membrane polymère en polyamide à taux de rejet de sel élevé.

9. Procédé selon l'une quelconque des revendications 1-8, dans lequel après chaque étape (a)-(d), une étape de diafiltration est réalisée en alimentant chaque membrane avec de l'eau pour obtenir un rétentat qui est combiné avec chaque perméat obtenu aux étapes (a)-(d).

10. Procédé selon la revendication 9, dans lequel l'eau utilisée pour la diafiltration est l'eau obtenue lors de l'étape d'osmose inverse (e).

11. Concentré d'eau de végétation d'olive, comprenant de l'hydroxytyrosol et du glucoside d'hydroxytyrosol obtenu par le procédé selon l'une quelconque des revendications 1-10, dans lequel le concentré comprend un pourcentage d'hydroxytyrosol et de glucoside d'hydroxytyrosol supérieur à 75 % par rapport au pourcentage de polyphénols totaux dans le concentré.

12. Concentré d'eau végétale selon la revendication 11, dans lequel le concentré comprend un pourcentage d'hydroxytyrosol et de glucoside d'hydroxytyrosol supérieur à 90 % par rapport au pourcentage de polyphénols totaux dans le concentré.

13. Concentré selon la revendication 11 ou 12, comprenant du 3,4-DHPEA-EDA.

14. Concentré selon l'une quelconque des revendications 11-13, comprenant en outre : au moins un composé phénolique choisi parmi : le tyrosol, le β-hydroxyverbascoside et le verbascoside ; et/ou au moins un hydrate de carbone choisi parmi le glucose, et le fructose et/ou l'acide caféique.

15. Utilisation du concentré selon l'une quelconque des revendications 11-14 comme complément nutritionnel.
